# EUROPEAN PATENT SPECIFICATION

(11) **EP 4 529 673 B1**
(45) Date of publication and mention of the grant of the patent: **15.07.2026**
(21) Application number: 23812249.3
(22) Date of filing: 22.05.2023
(51) Int. Cl.: G06V 40/18, G06V 40/40, G06V 10/24, G06V 10/60, G06V 40/16, G06V 10/145

(54) **REAL-EYE DETECTION USING LIGHT OF DIFFERENT POLARIZATION ROTATIONS**
ERKENNUNG DES REALEN AUGES MIT LICHT MIT VERSCHIEDENEN POLARISATIONSDREHUNGEN
DÉTECTION D'OEIL RÉEL À L'AIDE D'UNE LUMIÈRE DE DIFFÉRENTES ROTATIONS DE POLARISATION

(30) Priority: 23.05.2022 SE 2250613
(43) Date of publication of application: 02.04.2025
(73) Proprietor: Fingerprint Cards Anacatum IP AB, 411 19 Göteborg (SE)
(72) Inventor: HINE, Gabriel, 00122 ROME (IT); STEGMANN, Mikkel, 2720 VANLØSE (DK)
(74) Representative: Kransell & Wennborg KB
(86) International application number: PCT/SE2023/050503
(87) International publication number: WO 2023/229512

(56) References cited:
- EP-A1- 3 866 447
- US-A1- 2003 152 252
- US-A1- 2017 091 548
- US-A1- 2017 161 578
- US-A1- 2017 161 578
- US-A1- 2019 266 399
- US-B2- 11 017 225
- RANI SHILPA ET AL: "IRIS based Recognition and Spoofing Attacks: A Review", 2021 10TH INTERNATIONAL CONFERENCE ON SYSTEM MODELING & ADVANCEMENT IN RESEARCH TRENDS (SMART), IEEE, 10 December 2021 (2021-12-10), pages 2 - 6, XP034069794, ISBN: 978-1-6654-3968-8, [retrieved on 20220107], DOI: 10.1109/SMART52563.2021.9676261
- MASTROPASQUA R ET AL.: "Interference figures of polarimetric interferometry analysis of the human corneal stroma", PLOS ONE, vol. 12, no. 6, 2017, pages e0178397, XP055551104, DOI: https://doi.org/10.1371/journal.pone.0178397

## Description

### TECHNICAL FIELD

The present disclosure relates to a method of a biometric recognition system of performing real-eye detection, and a biometric recognition system performing the method.

### BACKGROUND

When capturing images of an eye of a user for performing iris recognition using for instance a camera of a smartphone for subsequently unlocking the smart phone of the user, subtle visual structures and features of the user's iris are identified in the captured image and compared to corresponding features of a previously enrolled iris image in order to find a match. These structures are a strong carrier of eye identity, and by association, subject identity.

Both during authentication and enrolment of the user, accurate detection of these features is pivotal for performing reliable iris recognition. However, iris recognition is susceptible to spoofing where an attacker e.g. may present a credible and detailed iris printout to an iris recognition system for attaining false authentication. Relevant prior art document, US 2017/161578 A1 (IVANISOV ALEXANDER [US] ET AL) 8 June 2017, discloses a method for selecting a system response based on characteristics of acquired biometric information, comprising the steps of: (i) receiving at least one image comprising an image of at least part of an eye, (ii) determining whether the at least part of an eye has birefringent characteristics, (iii) selecting a system response, wherein said selection depends on (a) whether the at least part of an eye exhibits birefringent characteristics that are inconsistent with a predefined set of birefringent characteristics or (b) whether the at least part of any eye exhibits a lack of birefringent characteristics typical of a real eye.

### SUMMARY

One objective is to solve, or at least mitigate, this problem in the art and thus to provide an improved method of a biometric recognition system of performing real-eye detection. The solution to this objective is provided by the present invention as defined by the appended claims.

This objective is attained in a first aspect by a method of a biometric recognition system of performing real-eye detection for an individual. The method comprises capturing a plurality of images comprising a representation of an eye of the individual, which images are captured utilizing polarized light reflected at the eye and received at a polarization-sensitive camera capturing said images, wherein for each image being captured a different polarization rotation is selected, detecting from the representation in each captured image birefringent features of a cornea of the individual, determining, by matching the detected birefringent cornea features of the captured images with the expected birefringent cornea features, whether the detected birefringent cornea features are correctly rendered in at least one of the captured images, and if so determining that the eye is a real eye.

This objective is attained in a second aspect by a biometric recognition system configured to perform real-eye detection. The system comprises a polarization-sensitive camera configured to capture a plurality of images comprising a representation of an eye of the individual, which images are captured utilizing polarized light reflected at the eye and received at a polarization-sensitive camera capturing said images, wherein for each image being captured a different polarization rotation is selected. The system further comprises a processing unit configured to detect, from the representation in each captured image, birefringent features of a cornea of the individual, determine, by matching the detected birefringent cornea features of the captured images with the expected birefringent cornea features, whether the detected birefringent cornea features are correctly rendered in at least one of the captured images, and if so to determine that the eye is a real eye.

Thus, by subjecting the eye of an individual to polarized light and capturing an image of the eye with a polarization-sensitive camera, so-called birefringent features of the cornea covering the iris will be present in the image. A spoof eye provided by an attacker, such as a paper printout, will not exhibit the birefringent cornea features and may thus be detected as a spoof.

If the detected birefringent cornea features have the appearance that would be expected upon a particular polarization configuration being applied, they are considered correctly rendered and the eye will be determined to be a real, authentic eye. To this effect, the detected birefringent cornea features may be matched against birefringent cornea features of a reference image and if there is a match, the detected birefringent cornea features are considered correctly rendered.

Now, if the user tilts her head (and thus her eyes), the birefringent cornea features typically become blurred and/or deformed in the captured image due to various polarization properties, making it difficult to determine whether or not the detected blurred/deform birefringent cornea features are correctly rendered in a captured image, or even that the birefringent cornea features at all are present in a captured image for subsequent detection.

To resolve this issue, a plurality of images are captured each with a different rotation of the polarization orientation, where only a selected polarization rotation which aligns with (or at least being close to aligning with) the eye orientation of the user will result in an image free from blur/deformations.

The detected birefringent cornea features of that image (or potentially all captured images) are then compared with expected birefringent cornea features e.g. from a reference image for a match and thus it is determined whether the birefringent features are correctly rendered in the captured image and if so, it is determined that the iris originates from a real eye.

Advantageously, this makes the system invariant to user head-tilts; even if the user would tilt her head, images are captured where the rotation of the orientation of the polarization is different for each captured images, and thus it is possible to captured an image where the rotation of the polarization aligns with the head-tilt.

Thus, this will make the detection of birefringent cornea features in a captured image far more effective, and the number of false rejections may be decreased since the sensitivity of the system is improved.

In an embodiment, the detected birefringent cornea features of the captured images are aligned with birefringent cornea features of an expected eye representation.

In an embodiment, the polarization of the light and the polarization at the camera is selected to be cross-polarized.

In an embodiment, information indicating an estimated head-tilt of the individual is acquired, wherein the capturing of images are performed with a polarization rotation selected to be in a range adapted to match the estimated head-tilt and/or the aligning of the detected birefringent cornea features with birefringent cornea features of an expected eye representation is performed by selecting images being captured with a polarization rotation being in a range of the estimated head-tilt as candidates for the aligning.

In an embodiment, the aligning is performed by rotating each captured representation of the eye such that said each captured eye representation has a same orientation as a non-tilted expected eye representation or by rotating the non-tilted expected eye representation to have the same eye orientation as said each captured eye representation, the rotation performed corresponding to the selected polarization rotation.

In an embodiment, if after a set number of failed attempts have been made for determining that the birefringent features are correctly rendered in the at least one of the captured images, the individual is required to prove knowledge of secret credentials before further attempts are allowed.

In an embodiment, the detected birefringent cornea features determined to be correctly rendered is compared with previously enrolled birefringent cornea features, and if there is a match an individual associated with the birefringent cornea features determined to be correctly rendered is authenticated.

In an embodiment, iris, face or periocular features are detected from the image in which the birefringent cornea features are determined to be correctly rendered and compared with previously enrolled iris, face or periocular features, and if there is a match an individual associated with the detected iris, face or periocular features is authenticated.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figure 1 illustrates a user being located in front of a smart phone, in which embodiments may be implemented;
Figure 2 shows a camera image sensor being part of an iris recognition system according to an embodiment;
Figure 3a illustrates a user being subjected to unpolarized light for iris image capture;
Figure 3b illustrates a user being subjected to polarized light for iris image capture by a polarization-sensitive camera according to an embodiment;
Figure 4a illustrates an eye being subjected to unpolarized light;
Figure 4b illustrates an eye being subjected to polarized light where a polarization-sensitive camera will capture images comprising birefringent features of the cornea according to an embodiment;
Figure 4c illustrates different appearances of birefringent features of the cornea of the user when selecting different sets of polarization properties of polarizing filters;
Figure 5 illustrates deformation of birefringent cornea features occurring during head-roll;
Figure 6 shows a flowchart of a method of performing real-eye detection according to an embodiment;
Figure 7 illustrates capturing multiple images at different polarization rotations according to embodiments;
Figure 8 shows a flowchart of a method of a biometric recognition system of performing real-eye detection and further birefringent cornea feature authentication according to an embodiment;
Figure 9 illustrates three different authentication responses (a)-(c) according to embodiments; and
Figure 10 shows a flowchart of a method of a biometric recognition system of performing real-eye detection and further iris feature authentication according to an embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

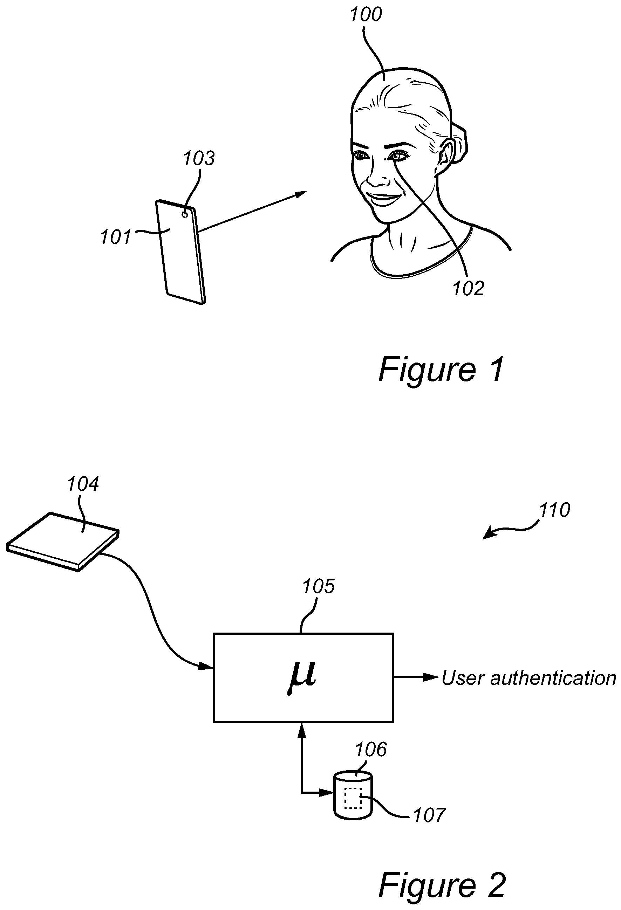

Figure 1 illustrates a user 100 being located in front of a smart phone 101. In order to unlock the smart phone 101, a camera 103 of the smart phone 101 is used to capture one or more images of an eye 102 of the user 100.

After having captured the image(s), the user's iris is identified in the image(s) and unique features of the iris are extracted from the image and compared to features of an iris image previously captured during enrolment of the user 100. If the iris features of the currently captured image - at least to a sufficiently high degree - correspond to those of the previously enrolled image, there is a match and the user 100 is authenticated. The smart phone 101 is hence unlocked.

It should be noted that this is exemplifying only, and that authentication may be utilized for numerous purposes, such as e.g. unlocking a vehicle to be entered by a user, allowing a user to enter a building, to perform a purchase at a point-of-sale terminal, etc, using appropriately adapted iris recognition systems.

Figure 2 shows a camera image sensor 104 being part of a biometric recognition system 110 according to an embodiment implemented in e.g. the smart phone 101 of Figure 1. The system will be referred to as an iris recognition system but may alternatively be used to recognize face- or periocular features of an individual. The iris recognition system 110 comprises the image sensor 104 and a processing unit 105, such as one or more microprocessors, for controlling the image sensor 104 and for analysing captured images of one or both of the eyes 102 of the user 100. The iris recognition system 110 further comprises a memory 106. The iris recognition system 110 in turn, typically, forms part of the smart phone 100 as exemplified in Figure 1.

The camera 103 will capture an image of the user's eye 102 resulting in a representation of the eye being created by the image sensor 104 in order to have the processing unit 105 determine whether the iris data extracted by the processing unit 105 from image sensor data corresponds to the iris of an authorised user or not by comparing the iris image to one or more authorised previously enrolled iris templates pre-stored in the memory 106.

With reference again to Figure 2, the steps of the method performed by the iris recognition system 110 are in practice performed by the processing unit 105 embodied in the form of one or more microprocessors arranged to execute a computer program 107 downloaded to the storage medium 106 associated with the microprocessor, such as a RAM, a Flash memory or a hard disk drive. Alternatively, the computer program is included in the memory (being for instance a NOR flash) during manufacturing. The processing unit 105 is arranged to cause the iris recognition system 110 to carry out the method according to embodiments when the appropriate computer program 107 comprising computer-executable instructions is downloaded to the storage medium 106 and executed by the processing unit 105. The storage medium 106 may also be a computer program product comprising the computer program 107. Alternatively, the computer program 107 may be transferred to the storage medium 106 by means of a suitable computer program product, such as a Digital Versatile Disc (DVD) or a memory stick. As a further alternative, the computer program 107 may be downloaded to the storage medium 106 over a network. The processing unit 105 may alternatively be embodied in the form of a digital signal processor (DSP), an application specific integrated circuit (ASIC), a field-programmable gate array (FPGA), a complex programmable logic device (CPLD), etc.

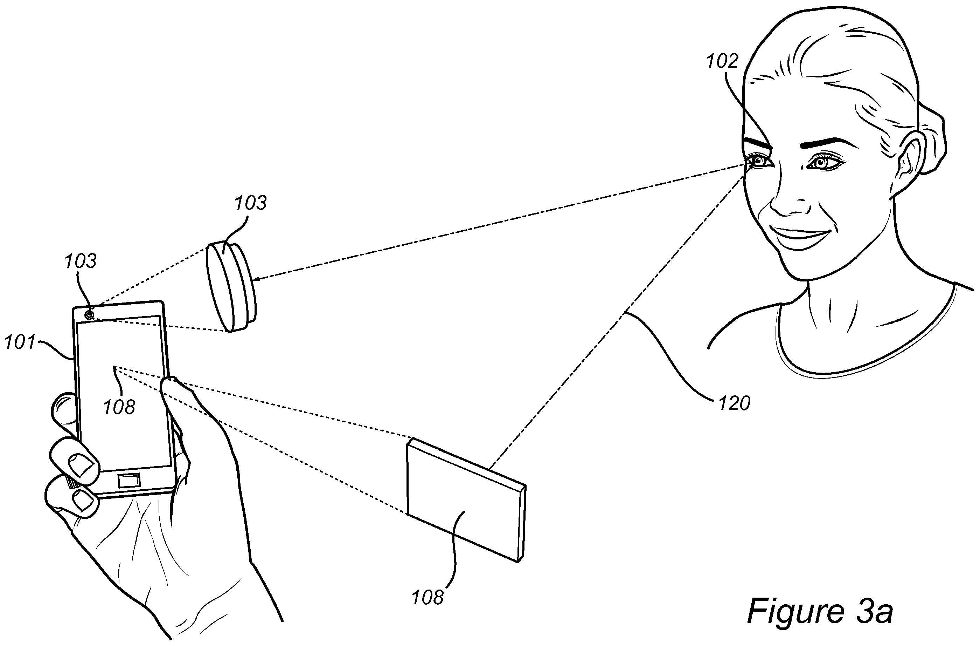

Now, with reference to Figure 3a, in an example it is assumed that unpolarized light 120 is being emitted, e.g. by light-emitting elements 108 of a screen of the smart phone 101 or by a camera flash, travelling in a path from the smart phone 101 to the eye 102 of the user and back to an image sensor of the camera 103.

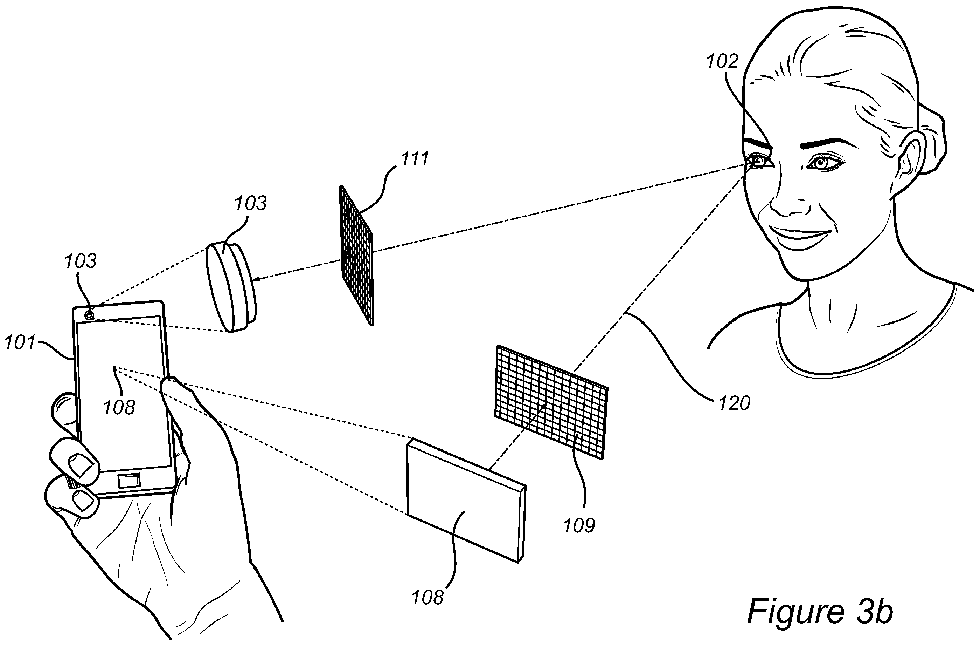

In Figure 3b, it is assumed that the emitted light 120 travelling in a path from the smart phone 101 to the eye 102 of the user and back to the image sensor of the camera 103 is polarized. In this particular example, the polarization of the light 120 is caused by a first polarizing filter 109 arranged at the light-emitting elements 108, for instance being implemented in the form of a polarizing film attached to the screen of the smart phone 101. Further in Figure 3b, a second polarizing filter 111 is arranged at the camera 103, for instance being implemented in the form of a polarizing film attached to a lens of the camera 103.

Thus, the camera 103 must be polarization-sensitive in order to be able to perceive the polarized light 120 being reflected against the eye 102 and impinging on the image sensor of the camera 103.

In practice, the image sensor 104 of Figure 2 may be a polarization image sensor where pixel responses vary according to polarization characteristics of the light impinging on the sensor. In other words, an image sensor which is intrinsically selective to polarization by means of a polarizer (i.e. equivalent to the second filter 111 being arranged inside the camera 103 at the image sensor 104) may advantageously be utilized. However, for illustrative purposes, a separate polarization filter 111 is used, which also may be envisaged in a practical implementation as a less expensive alternative to the polarization image sensor.

Now, a human cornea - i.e. the outer membrane in front of the iris - exhibits birefringent properties that are apparent in a captured image when the iris is illuminated with polarized light and the image is captured with a polarization-sensitive camera 103.

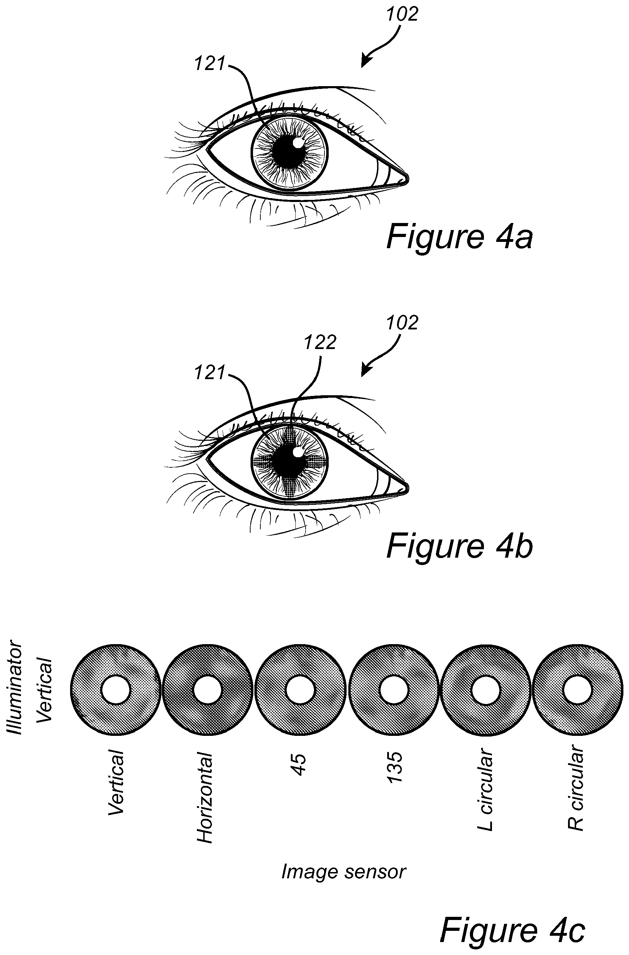

Thus, as shown in Figure 4a corresponding to the scenario of Figure 3a where the eye 102 is subjected to unpolarized light, a "normal" iris 121 will be present in the image captured by the camera 103 whereas in Figure 4b corresponding to the scenario of Figure 3b where the eye 102 is subjected to polarized light, birefringent features 122 of the cornea will be present in the image captured by the polarization-sensitive camera 103 caused by the polarized light impinging on the cornea covering the iris 121. As is understood, should a camera be used which is not polarization-sensitive, the birefringent features will not be present in the captured image, even if the light 120 travelling towards the eye is polarized.

Thus, an image captured by the polarization-sensitive camera 103 while subjecting the iris 121 to polarized light will comprise birefringent cornea features 122 and may thus be utilized for detecting whether the eye 102 is a real, authentic eye or not.

For instance, assuming that an attacker subjects the iris recognition system 110 to a spoof attempt where the attacker presents e.g. a printout of a user's iris. Such a printout will not comprise the birefringent cornea features 122 of the eye 102 of the user, even if it should be noted that iris features of this printout may correspond perfectly to those of the user. Thus, if no birefringent features are detected in the captured image, the system 110 terminates the authentication process since the presented iris is not deemed to originate from a real eye.

Figure 4c illustrates different appearances of birefringent features of the cornea of the user in case of the light emitted by the light-emitting elements 108 is vertically polarized by the first polarizing filter 109 while the light received at the camera 103 is vertically, horizontally, 45°, 135°, left circularly and right circularly polarized, respectively, by the second polarizing filter 111 (or by an intrinsic polarizer in case a polarization image sensor is used). As is understood, the first polarizing filter 109 could also be configured to have any one of a vertically, horizontally, 45°, 135°, left circularly and right circularly polarization, which in this particular example potentially would result in 6 x 6 = 36 different appearances of the birefringent cornea features.

Hence, the appearance of the birefringent features depends on the combination of polarization configuration selected for the first polarizing filter 109 and the second polarizing filter 111. As is understood, one or both of the polarization filters 109, 111 may be configured to be electrically controllable to change polarization. In such a case, the processing unit 105 may control the filters 109, 111 to change polarization configuration as desired.

As mentioned, the system 110 may conclude whether or not birefringent cornea features 122 are present in the captured image and if so determining that the eye is a real eye. However, if the user tilts her head (and thus her eyes), the birefringent cornea features typically become blurred and/or deformed in the captured image due to various polarization properties, making it difficult to determine whether or not the detected blurred/deform birefringent cornea features are correctly rendered in a captured image, or even to detect that the birefringent cornea features at all are present in a captured image.

As is understood, a head tilt may occur in any direction, i.e. pitch (back and forth), roll (from side to side) or yaw (rotation around the neck), all of which may cause blurring or deformation of birefringent cornea features. Embodiments disclosed herein mainly pertain to adapting to user head tilt in the form of head rolls.

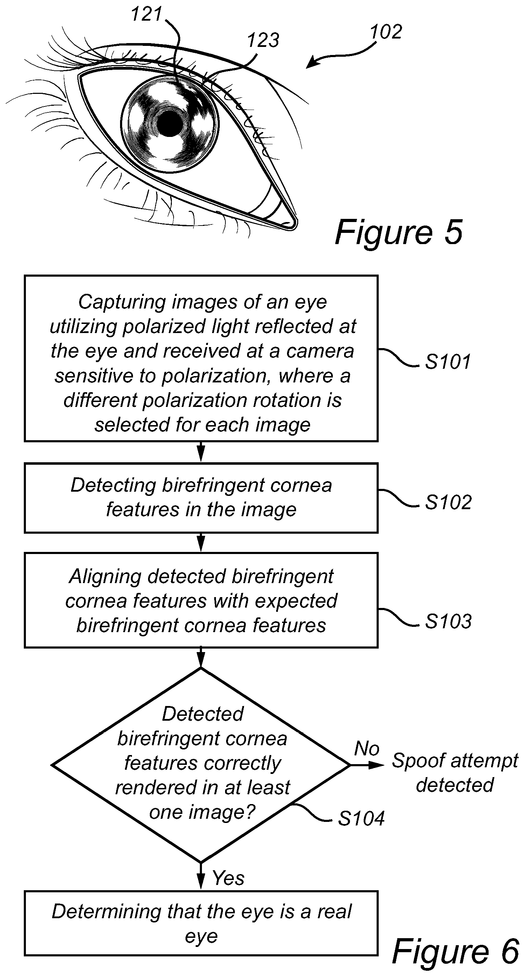

Now, with reference to Figure 5, if the user 100 tilts her head (and thus her eye 102), the birefringent cornea features typically become blurred and/or deformed in the captured image due to various polarization properties (as compared to the non-deformed representation and cornea features 122 illustrated in Figure 4b), making it difficult to determine whether or not the detected blurred/deform birefringent cornea features 123 are correctly rendered. As illustrated, birefringent cornea features 123 detected in the eye representation of Figure 5 will not have the appearance that would be expected (taken into account the utilized polarization configuration, cf. Figure 4c).

Typically, with reference to Figure 5, the detected but deformed cornea features 123 caused by the head-tilt would be determined to be incorrectly rendered, i.e. they would not have the expected appearance, and the eye 102 will not be considered a real eye - but likely a spoof - and the authentication process would be terminated.

Figure 6 shows a flowchart of a method of performing real-eye detection resolving this issue, according to an embodiment.

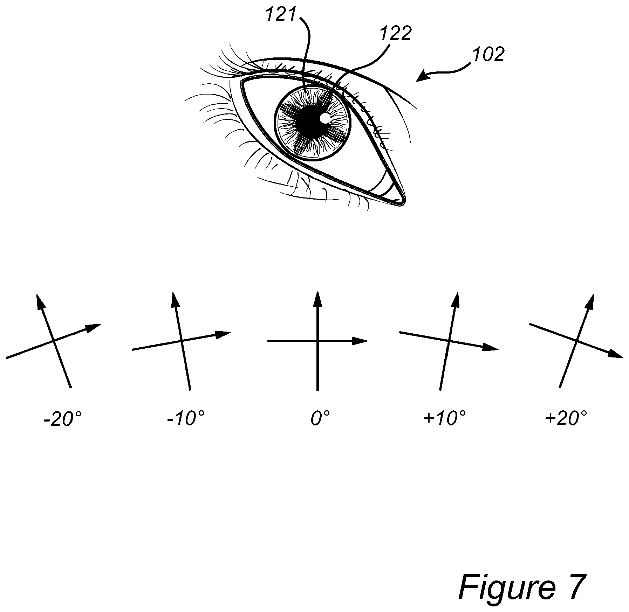

Reference will further be made to Figure 7 illustrating an image of an eye captured with a 20° left-direction head-tilt according to the embodiment.

As is illustrated, five images are captured each with a different selected rotation of the polarization of the first polarization filter 109 and the second polarization filter 111. Thus, a different polarization rotation is utilized for each captured image while maintaining a same relative orientation between the polarization of the first filter 109 and the polarization of the second filter.

In this example, the rotation of the polarization ranges from -20° to +20° with a resolution of 10°, wherein if the polarization of the first polarization filter 109 is rotated e.g. +10°, then the polarization of the second polarization filter 111 is also rotated +10°, if the polarization of the first polarization filter 109 is rotated e.g. +20°, then the polarization of the second polarization filter 111 is also rotated +20°, and so on.

In the embodiment illustrated in Figure 7, a cross-polarization configuration is selected for the first filter 109 and the second filter 111, i.e. the polarization orientation of the first filter 109 is selected to be orthogonal with respect to the polarization orientation of the second filter 111. In the example of Figure 7, one of the two filters is vertically polarized while the other is horizontally polarized at zero rotation, and as the polarization orientation of the respective filter 109, 111 is rotated, the orthogonal relationship between the polarization orientation of the first filter 109 and the second filter 111 is maintained.

Now, for each image being captured with a selected polarization rotation deviating from the actual head tilt- and thus eye orientation - of the user 100, a deformation will occur in the captured image as previously discussed with reference to Figure 5 and it may not be possible to determine whether or not detected birefringent cornea features are correctly rendered in a captured image.

As illustrated in Figure 7, only a selected polarization rotation which aligns with (or at least being close to aligning with) the eye orientation of the user 100 - in this example a 20° left-tilt - will result in an image free from blur/deformations.

Thus, if an image is captured using a same rotation of the polarization by the first polarization filter 109 and the polarization of the second polarization filter 111 as the head-tilt of the user 100, i.e. the selected rotation of the two polarizations being aligned with the eye orientation of the user 100 as illustrated with the far-right 20° rotation of the polarization of both the first filter 109 and the second filter 111, the birefringent cornea features 122 will not be deformed.

The rationale is that if both the polarizing filters 109, 111 and the eye 102 are tilted by the same angle, the relative rotation between the camera 103 and the eye 102 is zero resulting in an image with non-deformed birefringent cornea features.

Figure 6 illustrates that in a first step S101, the polarization-sensitive camera 103 is controlled (typically by the processing unit 105) to capture a plurality of images of an iris 121, which images are captured utilizing polarization of light 120 received at the image sensor 104 of the camera 103. In this example, the polarization of light is caused by the first polarizing filter 109, while the second polarization filter 111 causes the camera 103 to become polarization-sensitive (although a polarization image sensor may be used as previously discussed).

In this embodiment, a cross-polarization configuration is selected for the first filter 109 and the second filter 111, i.e. one of the two filters is vertically polarized while the other is horizontally polarized. An advantage of using cross-polarization is that capturing of direct reflections that cause saturated spots in the image may be avoided. The reflections may occur on the eye itself or on glasses worn by the user.

However, any appropriate polarization configuration may be selected for the first polarization filter 109 and the second polarization filter 111. The selected polarization configuration must be taken into account upon subsequently determining whether or not detected birefringent cornea features 102 are correctly rendered in a captured image, since different combinations of polarizations will have different expected eye appearances as previously discussed with reference to Figure 4c.

In step S101, for each image captured the polarization of the first and second filter 109, 111 is hence slightly rotated, for instance starting at -20° and ending at +20° in steps of 10° thereby capturing five images. As discussed, this may be effected by implementing the polarization filters 109, 111 as an electrically controllable filter where the polarization of both filters 109, 111 is rotated by 10° in a left-hand direction for each image being captured.

In other words, for each image being captured a different rotation is selected for the polarization orientation of the light 120 and the polarization orientation at the camera 103 while maintaining a same relative orientation between the polarization of the light 120 and the polarization at the camera 103.

For any captured image where the selected rotation of the polarization of the first filter 109 and the second filter 111 does not correspond to the head tilt of the user (or at least does not correspond to a sufficient degree), any birefringent cornea features in the image will be blurred and deformed, in line with what has previously been discussed.

Nevertheless, for each image, birefringent cornea features are detected by the processing unit 105 in step S102 (or at least an attempt is made to detect the birefringent cornea features).

As previously illustrated in Figure 4c, the appearance of the birefringent features 122 depends on the combination of polarization properties selected for the first polarizing filter 109 and the second polarizing filter 111. In this embodiment, the first filter 109 is vertically polarized while the second filter 111 is horizontally polarized resulting in a particular appearance that may be expected for such polarization configuration, i.e. the second illustration from the left in Figure 4c.

Thereafter, the detected birefringent cornea features 122 of each captured image are aligned with birefringent cornea features of an expected eye representation in step S103.

In practice, taking the fifth captured image with a polarization rotation of +20° as example, this may be performed by rotating the captured representation of the iris 20° to the right or by rotating a non-tilted, expected iris representation 20° to the left such that the captured representation and the expected representation have the same orientation (i.e. either zero tilt or a 20° left-tilt), thereby causing the captured representation and the expected representation to orientationally match.

As is understood, in a scenario where the camera 103 is equipped with multiple rotated sensors, or where the sensor 104 is arranged to be mechanically rotatable along with the rotation of the polarization orientation of the filters 109, 111, the aligning of step S103 is not required and may thus be omitted. Nevertheless, in embodiments described hereinbelow, it is assumed that a single fixed sensor is used and alignment according to step S103 thus is required.

Thus, either the captured eye representation or the expected eye representation is rotated to the same extent as the rotation of the polarization used for the captured image in order to have the detected cornea features 122 align with those of the expected eye representation.

As is understood, if the aligning process would start with the first captured image having a polarization rotation of -20°, a match would not be found for that image since the selected polarization rotation would not match the actual head tilt of the user thereby causing deformed cornea features, whereupon the process would proceed by aligning the second captured image with the expected representation, and so on, until a match indeed is found for the fifth image. Should the aligning process start with the fifth image and thus find a match after the 20° alignment has been performed, the process will not perform any further alignment attempts with the remaining four images.

Alternatively, an indication of the user head-tilt may be acquired and used as a starting point in order to avoid having to evaluate each captured image during alignment. For example, the head-tilt may be estimated by means of performing face analysis on a captured image. Based on the estimated head-tilt, one or more captured images are selected as candidates for the alignment. For instance, if the head-tilt is estimated to be around 10-20°, then the processing unit 105 may conclude that only images having been captured with a polarization rotation within the range of the estimated head-tilt will be considered for alignment. For instance, with respect to Figure 7, only the two images with +10° and +20° polarization rotation may be considered suitable candidates for alignment with the expected eye representation in order to find a match.

Further, if an indication of the user head-tilt is acquired from an initially captured image (e.g. with a zero polarization rotation selected), such as e.g. head-tilt estimated to be around 10-20°, then the processing unit 105 may conclude that a number of images are captured with a polarization rotation selected to be in that range. As is understood, if the head tilt is estimated to be around +20°, it is not useful to capture an image having a polarization rotation of, say, -20°.

In other words, a best match may be evaluated for one or more of the captured images by aligning the captured eye representation with the expected eye representation by tilting one or the other representation with the angle corresponding to the selected polarization rotation (-20°, -10, 0, +10° and +20°, respectively) such that the captured eye representation is aligned with the expected eye representation for each image.

Thereafter, in step S104, the processing unit 105 detects - by matching the detected birefringent cornea features 122 with the expected birefringent cornea features (e.g. taken from a reference image) - whether the birefringent features 122 are correctly rendered in at least one of the five captured images, i.e. that the detected birefringent cornea features 122 of said at least one image match the expected appearance of the birefringent cornea features (cf. Figure 4c) when the head-tilt has been compensated for and the detected birefringent cornea features thus are aligned with the expected birefringent cornea features and hence have the same orientation.

If so, the processing unit 105 determines in step S105 that the eye in the captured image is a real eye. If not, the processing unit 105 may advantageously determine that a spoof attempt has been detected and the authentication process is terminated.

As will be concluded in step S104, only a captured image which indeed has the same (or at least similar) selected polarization rotation as the head tilt of the user - in this example the image having the selected +20° polarization rotation - will present birefringent cornea features free from deformation, which thus can be aligned with and likely be regarded to correspond to the expected birefringent cornea features.

Hence, as illustrated in Figure 7, of the five captured images, the image captured at a polarization rotation of +20° will be the image most correctly corresponding to the head tilt and which thus will present (non-blurred) birefringent cornea features which has the best chance of corresponding to the expected birefringent features after alignment.

Advantageously, this makes the system invariant to user head-tilts; even if the user would tilt her head as illustrated in Figure 7, a correctly selected rotation of the applied polarization mitigates or even eliminates any blurring/deformation of birefringent cornea features in a captured image caused by the head-tilt, which after subsequent alignment can be matched to expected birefringent cornea features in order to determine that the eye is a real eye.

If none of the selected polarization rotations sufficiently corresponds to the actual head tilt of the user, resulting in a non-successful match in step S104 after alignment (due to blurred/deformed cornea features in the captured images), the processing unit 105 may determine that a potential spoof attempt has been detected and the authentication process is terminated.

As is understood, the system 110 may accept some degree of misalignment between a captured eye representation and an expected eye representation in terms of polarization rotation. In practice, if the polarization rotation is selected to have a resolution of 10°, any +/- 5° misalignment of the polarization rotation with the actual head tilt may still result in an acceptable deformation of the birefringent cornea features. Hence, in this example, any image being captured with a polarization rotation between +15° and +25° may in practice be accepted by the system in that the detected cornea features would be determined to be correctly rendered after having been aligned to take into account the eye orientation of the user.

In a further embodiment, it is envisaged that if after a number of failed detection attempts have been made in step S104 for a set of captured images, such as two failed attempts, the iris recognition system 110 enters a breach mode, where the user is required to prove knowledge of secret credentials, for instance enter a pin code, before any further attempts can be made.

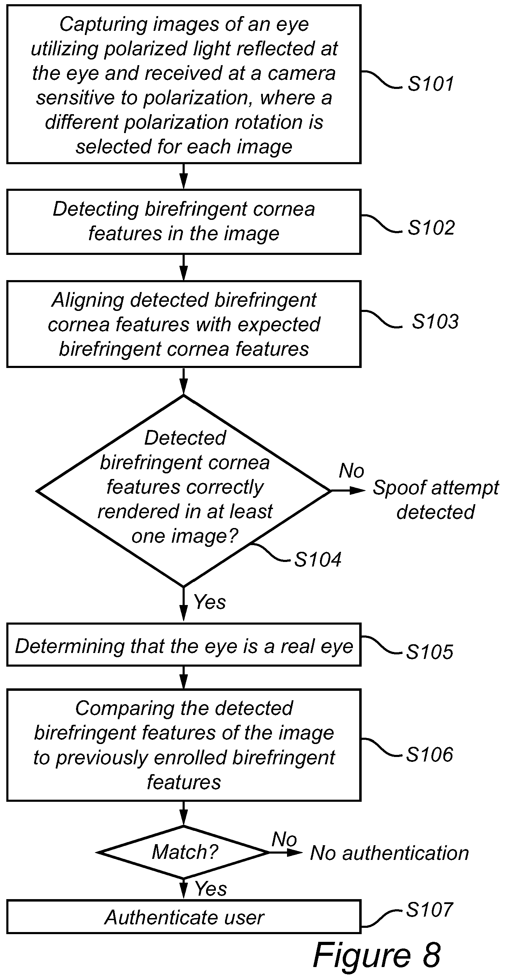

Figure 8 illustrates a further embodiment where the detected birefringent cornea features not only are used for detecting an authentic eye but also are utilized to authenticate a user.

As previously discussed with reference to Figure 4c, the birefringent features 122 will have different appearances depending on the polarization configuration used, as determined by the first and second polarizing filters 109, 111, and are further distinctive to the user 100.

A user will typically exhibit characteristic birefringent features for each given configuration, from which characteristic birefringent features the user may be recognized, in addition to detecting whether or not the eye is authentic as has been described in the previous embodiments.

In the embodiment of Figure 8, this is exploited to authenticate an individual, for instance with the purpose of e.g. unlocking the smart phone 101 or allow a user to start a car in case the system is implemented in the car.

Thus, if after the processing unit 105 has determined in step S105 from one of the captured images that the eye indeed is a real eye, the birefringent cornea features detected in step S104 to be correctly rendered is compared in step S106 to previously enrolled birefringent cornea features of templates stored in the memory 106 of the iris recognition system 110 and if there is a match between the detected birefringent features and the previously enrolled birefringent features, the user is authenticated in step S107.

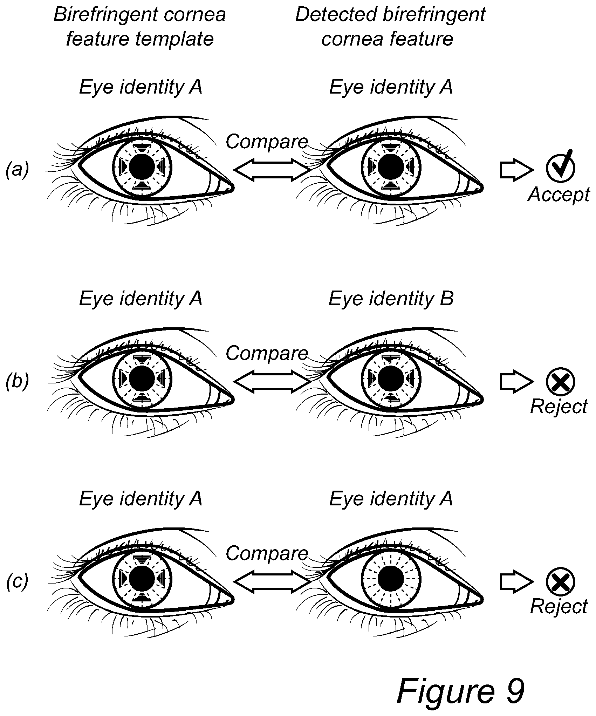

Figure 9 illustrates three different authentication scenarios to which reference will be made.

In first scenario (a), the birefringent cornea features detected in step S104 to be correctly rendered in one of the captured images are compared in step S106 to the previously enrolled birefringent cornea features of the templates stored in the memory 106 and since in this scenario there is a match between the detected birefringent features and the previously enrolled birefringent features, the user is authenticated in step S107. In other words, the identity of the user 100 associated with the detected birefringent features determined to be correctly rendered in step S104 must indeed correspond to identity A associated with the birefringent feature template pre-stored in the memory 106.

In second scenario (b), the birefringent cornea features detected in step S104 to be correctly rendered are compared in step S106 to the previously enrolled birefringent cornea features of the templates stored in the memory 106. However, since the detected birefringent features do not match the birefringent feature template in step S106, authentication is not successful. Thus, the detected birefringent features determined to be correctly rendered in step S104 cannot correspond to enrolled identity A but rather a different identity, in this example denoted identity B. As a result, the user is rejected.

In third scenario (c), an attempt is made in step S104 to detect birefringent cornea features from the images captured in step S101 but since in this scenario no birefringent features can be detected in anyone of the images, the system 110 concludes that a spoof attempt has occurred where an attacker presents e.g. a printout of a user's iris. It should be noted that iris features of this printout nevertheless may correspond perfectly to those of the user. As a result, the authentication process is terminated.

In a further embodiment, in addition to (or alternatively to) performing authentication based on detected birefringent cornea features, further detected biometric features of the captured images may also be considered.

It is noted that birefringent features of the cornea typically are less expressive than face features and even more so when compared to iris features. Thus, in a scenario where high security and reliability is required in the authentication process, the birefringent cornea feature detection described hereinabove is expanded upon such that iris feature detection and/or face feature detection and subsequent iris/face feature authentication further is undertaken.

Further envisaged biometric features to be utilized include those in the so-called periocular region, which is the area around the eye including features like eyelashes, eyebrows, eyelids, eye shape, tear duct, skin texture, etc.

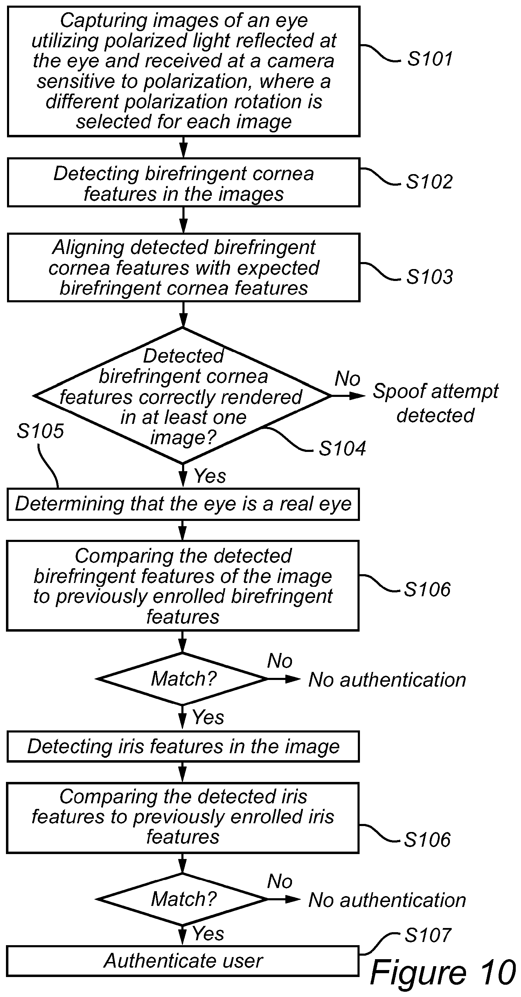

Figure 10 illustrates this embodiment, wherein after it has been determined that the detected birefringent cornea features matches those previously enrolled, iris features are detected in the image in which the birefringent corneal features where considered to be correctly rendered in step S106a. It is noted that the detection of iris features not necessarily is affected by the polarization filters 109, 111. For instance, as illustrated in Figure 4b, features of the iris 121 will be present in a captured image along with birefringent cornea features 122.

Thereafter, the processing unit 105 compares the detected iris features to previously enrolled iris feature template(s) in step S106b.

If there is a match also for the compared iris features, the user 100 is authenticated in step S107. If not, authentication fails.

Advantageously, not only is the level of security and reliability raised in the authentication process, but liveness detection is further provided by means of the birefringent cornea feature detection. In other words, if the presented iris is a spoof (such as a printout of an iris image), no birefringent cornea features will be detected and the authentication will be terminated in the match operation undertaken in step S104.

As is understood, if for some reason the iris features are difficult to detect in in the captured image(s) being subject to polarized light, appropriate image processing may be applied, such as filtering, before the iris detection. As a further alternative, an image not being subjected to polarization is captured from which the iris features are detected.

While Figure 10 illustrates that authentication is based on both detected birefringent cornea features (cf. S106) and detected iris features (cf. S106b), it may be envisaged that step S106 is omitted and that after the processing unit 105 has determined in step S105 that the iris indeed originates from a real eye, the process proceeds to step S106b for performing the authentication based on iris features only.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the scope of the invention as indicated by the following claims.

## Claims

1. A method of a biometric recognition system (110) of performing real-eye detection for an individual (100), comprising:
capturing (S101) a plurality of images comprising a representation of an eye (102) of the individual (100), which images are captured utilizing polarized light reflected at the eye (102) and received at a polarization-sensitive camera (103) capturing said images with a selected polarization configuration, wherein for each image being captured a different polarization rotation is selected;
detecting (S102), from the representation in each captured image, birefringent features (122) of a cornea of the individual (100);
determining (S104), by matching the detected birefringent cornea features (122) of the captured images with expected birefringent cornea features taking into account the polarization configuration, whether the detected birefringent cornea features (122) are correctly rendered in at least one of the captured images; and if so:
determining (S105) that the eye (102) is a real eye.

2. The method of claim 1, further comprising:
aligning (S103) the detected birefringent cornea features (122) of the captured images with birefringent cornea features of an expected eye representation.

3. The method of claims 1 or 2, wherein the polarization orientation of the light is selected to be orthogonal in relation to the polarization orientation at the camera.

4. The method of any one of claims 1-3, further comprising:
acquiring information indicating an estimated head-tilt of the individual (100) by means of performing face analysis on a captured image, wherein the capturing (S101) of images are performed with a polarization rotation selected to be in a range adapted to match the estimated head-tilt; and/or
the aligning (S103) of the detected birefringent cornea features (122) with birefringent cornea features of an expected eye representation is performed by selecting images being captured with a polarization rotation being in a range of the estimated head-tilt as candidates for the aligning.

5. The method of any one of claims 2-4, the aligning (S103) being performed by rotating each captured representation of the eye (102) such that said each captured eye representation has a same orientation as a non-tilted expected eye representation or by rotating the non-tilted expected eye representation to have the same eye orientation as said each captured eye representation, the rotation performed corresponding to the selected polarization rotation.

6. The method of any one of the preceding claims, wherein if after a set number of failed attempts have been made for determining (S104) that the birefringent features (122) are correctly rendered in the at least one of the captured images, the individual (100) is required to prove knowledge of secret credentials before further attempts are allowed.

7. The method of any one of the preceding claims, further comprising:
comparing (S106) the detected birefringent cornea features (122) determined to be correctly rendered with previously enrolled birefringent cornea features; and if there is a match:
authenticating (S107) an individual (100) associated with the birefringent cornea features (122) determined to be correctly rendered.

8. The method of any one of the preceding claims, further comprising:
detecting (S106a), from the image in which the birefringent cornea features are determined to be correctly rendered or from another captured image, iris, face or periocular features; and
comparing (S105b) the detected iris, face or periocular features with previously enrolled iris, face or periocular features; and if there is a match an individual (100) associated with the detected iris, face or periocular features is authenticated (S106).

9. A computer program (107) comprising computer-executable instructions for causing a biometric recognition system (110) to perform steps recited in any one of claims 1-8 when the computer-executable instructions are executed on a processing unit (105) included in the iris recognition system (110).

10. A computer readable medium (106), the computer readable medium having the computer program (107) according to claim 9 embodied thereon.

11. A biometric recognition system (110) configured to perform real-eye detection, the system (110) comprising a polarization-sensitive camera (103) configured to:
capture a plurality of images comprising a representation of an eye (102) of the individual (100), which images are captured utilizing polarized light reflected at the eye (102) and received at a polarization-sensitive camera (103) capturing said images with a selected polarization configuration, wherein for each image being captured a different polarization rotation is selected; the system (110) further comprising a processing unit (105) configured to:
detect, from the representation in each captured image, birefringent features (122) of a cornea of the individual (100);
determine, by matching the detected birefringent cornea features (122) of the captured images with the expected birefringent cornea features taking into account the polarization configuration, whether the detected birefringent cornea features (122) are correctly rendered in at least one of the captured images; and if so:
determine that the eye (102) is a real eye.

12. The biometric recognition system (110) of claim 11, the processing unit (105) further being configured to:
align the detected birefringent cornea features (122) of the captured images with birefringent cornea features of an expected eye representation.

13. The biometric recognition system (110) of claims 11 or 12, wherein the polarization orientation of the light is selected to be orthogonal in relation to the polarization orientation at the camera (103).

14. The biometric recognition system (110) of any one of claims 11-13, the processing unit (105) further being configured to:
acquire information indicating an estimated head-tilt of the individual (100) by means of performing face analysis on a captured image, wherein the capturing (S101) of images are performed with a polarization rotation selected to be in a range adapted to match the estimated head-tilt; and/or
the aligning (S103) of the detected birefringent cornea features (122) with birefringent cornea features of an expected eye representation is performed by selecting images being captured with a polarization rotation being in a range of the estimated head-tilt as candidates for the aligning.

15. The biometric recognition system (110) of any one of claims 12-14, the processing unit (105) being configured to perform the aligning by rotating the captured representation of the eye (102) such that the captured eye representation has a same orientation as a non-tilted expected eye representation or by rotating the non-tilted expected eye representation to have the same eye orientation as the captured eye representation, the rotation performed corresponding to the selected polarization rotation.

## Patentansprüche

1. Verfahren eines biometrischen Erkennungssystems (110) zum Durchführen einer Detektion eines echten Auges für eine Person (100), umfassend:
Aufnehmen (S101) mehrerer Bilder, die eine Darstellung eines Auges (102) der Person (100) umfassen, wobei die Bilder unter Verwendung von polarisiertem Licht aufgenommen werden, das an dem Auge (102) reflektiert und in einer polarisationsempfindlichen Kamera (103) empfangen wird, welche die Bilder mit einer ausgewählten Polarisationskonfiguration aufnimmt, wobei für jedes aufgenommene Bild eine andere Polarisationsdrehung gewählt wird;
Detektieren (S102), aus der Darstellung in jedem aufgenommenen Bild, doppelbrechender Merkmale (122) einer Hornhaut der Person (100);
Bestimmen (S104), durch Abgleichen der detektierten doppelbrechenden Hornhautmerkmale (122) der aufgenommenen Bilder mit erwarteten doppelbrechenden Hornhautmerkmalen unter Berücksichtigung der Polarisationskonfiguration, ob die detektierten doppelbrechenden Hornhautmerkmale (122) in mindestens einem der aufgenommenen Bilder korrekt wiedergegeben sind; und falls ja:
Bestimmen (S105), dass das Auge (102) ein echtes Auge ist.

2. Verfahren nach Anspruch 1, des Weiteren umfassend:
Ausrichten (S103) der detektierten doppelbrechenden Hornhautmerkmale (122) der aufgenommenen Bilder auf doppelbrechende Hornhautmerkmale einer erwarteten Augendarstellung.

3. Verfahren nach Anspruch 1 oder 2, wobei die Polarisationsausrichtung des Lichts so gewählt wird, dass sie in Bezug auf die Polarisationsausrichtung in der Kamera orthogonal verläuft.

4. Verfahren nach einem der Ansprüche 1-3, des Weiteren umfassend:
Erfassen von Informationen, die eine geschätzte Kopfneigung der Person (100) angeben, mittels Vornehmen einer Gesichtsanalyse an einem aufgenommenen Bild, wobei das Aufnehmen (S101) von Bildern mit einer Polarisationsdrehung durchgeführt wird, die so gewählt ist, dass sie in einem Bereich liegt, der darauf ausgelegt ist, mit der geschätzten Kopfneigung übereinzustimmen; und/oder
wobei das Ausrichten (S103) der detektierten doppelbrechenden Hornhautmerkmale (122) auf doppelbrechende Hornhautmerkmale einer erwarteten Augendarstellung durchgeführt wird durch: Auswählen von aufgenommenen Bildern mit einer Polarisationsdrehung, die in einem Bereich der geschätzten Kopfneigung liegt, als Kandidaten für das Ausrichten.

5. Verfahren nach einem der Ansprüche 2-4, wobei das Ausrichten (S103) durchgeführt wird durch: Drehen jeder aufgenommenen Darstellung des Auges (102) so, dass jede aufgenommene Augendarstellung eine selbe Ausrichtung hat wie eine nicht-geneigte erwartete Augendarstellung, oder durch Drehen der nicht-geneigten erwarteten Augendarstellung so, dass sie dieselbe Augenausrichtung hat wie jede aufgenommene Augendarstellung, wobei die Drehung entsprechend der gewählten Polarisationsdrehung durchgeführt wird.

6. Verfahren nach einem der vorangehenden Ansprüche, wobei, nachdem eine festgelegte Anzahl fehlgeschlagener Versuche unternommen wurde, um zu bestimmen (S104), dass die doppelbrechenden Merkmale (122) in dem mindestens einen der aufgenommenen Bilder korrekt wiedergegeben sind, die Person (100) aufgefordert wird, die Kenntnis geheimer Berechtigungen nachzuweisen, bevor weitere Versuche gestattet werden.

7. Verfahren nach einem der vorangehenden Ansprüche, des Weiteren umfassend:
Vergleichen (S106) der detektierten doppelbrechenden Hornhautmerkmale (122), von denen bestimmt wurde, dass sie korrekt wiedergegeben wurden, mit zuvor registrierten doppelbrechenden Hornhautmerkmalen; und falls eine Übereinstimmung vorliegt:
Authentifizieren (S107) einer Person (100), die mit den doppelbrechenden Hornhautmerkmalen (122) verknüpft ist, von denen bestimmt wurde, dass sie korrekt wiedergegeben wurden.

8. Verfahren nach einem der vorangehenden Ansprüche, des Weiteren umfassend:
Detektieren (S106a) von Iris-, Gesichts- oder periokulären Merkmalen in dem Bild, in dem die doppelbrechenden Hornhautmerkmale als korrekt wiedergegeben bestimmt wurden, oder in einem anderen aufgenommenen Bild; und
Vergleichen (S105b) der detektierten Iris-, Gesichts- oder periokulären Merkmale mit zuvor registrierten Iris-, Gesichts- oder periokulären Merkmalen; und falls eine Übereinstimmung vorliegt, so wird eine Person (100), die mit den detektierten Iris-, Gesichts- oder periokulären Merkmalen verknüpft ist, authentifiziert (S106).

9. Computerprogramm (107), das computerausführbare Instruktionen umfasst, um ein biometrisches Erkennungssystem (110) zu veranlassen, die in einem der Ansprüche 1-8 genannten Schritte auszuführen, wenn die computerausführbaren Instruktionen in einer in dem Iriserkennungssystem (110) enthaltenen Verarbeitungseinheit (105) ausgeführt werden.

10. Computerlesbares Medium (106), wobei auf dem computerlesbaren Medium das Computerprogramm (107) nach Anspruch 9 verkörpert ist.

11. Biometrisches Erkennungssystem (110), das dazu eingerichtet ist, eine Detektion eines echten Auges durchzuführen, wobei das System (110) eine polarisationsempfindliche Kamera (103) umfasst, die eingerichtet ist zum:
Aufnehmen mehrerer Bilder, die eine Darstellung eines Auges (102) der Person (100) umfassen, wobei die Bilder unter Verwendung von polarisiertem Licht aufgenommen werden, das an dem Auge (102) reflektiert und in einer polarisationsempfindlichen Kamera (103) empfangen wird, welche die Bilder mit einer ausgewählten Polarisationskonfiguration aufnimmt, wobei für jedes aufgenommene Bild eine andere Polarisationsdrehung gewählt wird; wobei das System (110) des Weiteren eine Verarbeitungseinheit (105) umfasst, die eingerichtet ist zum:
Detektieren, aus der Darstellung in jedem aufgenommenen Bild, doppelbrechender Merkmale (122) einer Hornhaut der Person (100);
Bestimmen, durch Abgleichen der detektierten doppelbrechenden Hornhautmerkmale (122) der aufgenommenen Bilder mit den erwarteten doppelbrechenden Hornhautmerkmalen unter Berücksichtigung der Polarisationskonfiguration, ob die detektierten doppelbrechenden Hornhautmerkmale (122) in mindestens einem der aufgenommenen Bilder korrekt wiedergegeben sind; und falls ja:
Bestimmen, dass das Auge (102) ein echtes Auge ist.

12. Biometrisches Erkennungssystem (110) nach Anspruch 11, wobei die Verarbeitungseinheit (105) des Weiteren eingerichtet ist zum:
Ausrichten der detektierten doppelbrechenden Hornhautmerkmale (122) der aufgenommenen Bilder auf doppelbrechende Hornhautmerkmale einer erwarteten Augendarstellung.

13. Biometrisches Erkennungssystem (110) nach Anspruch 11 oder 12, wobei die Polarisationsausrichtung des Lichts so gewählt wird, dass sie in Bezug auf die Polarisationsausrichtung in der Kamera (103) orthogonal verläuft.

14. Biometrisches Erkennungssystem (110) nach einem der Ansprüche 11-13, wobei die Verarbeitungseinheit (105) des Weiteren eingerichtet ist zum:
Erfassen von Informationen, die eine geschätzte Kopfneigung der Person (100) angeben, mittels Vornehmen einer Gesichtsanalyse an einem aufgenommenen Bild, wobei das Aufnehmen (S101) von Bildern mit einer Polarisationsdrehung durchgeführt wird, die so gewählt ist, dass sie in einem Bereich liegt, der darauf ausgelegt ist, mit der geschätzten Kopfneigung übereinzustimmen; und/oder
wobei das Ausrichten (S103) der detektierten doppelbrechenden Hornhautmerkmale (122) auf doppelbrechende Hornhautmerkmale einer erwarteten Augendarstellung durchgeführt wird durch: Auswählen von aufgenommenen Bildern mit einer Polarisationsdrehung, die in einem Bereich der geschätzten Kopfneigung liegt, als Kandidaten für das Ausrichten.

15. Biometrisches Erkennungssystem (110) nach einem der Ansprüche 12-14, wobei die Verarbeitungseinheit (105) eingerichtet ist zum: Durchführen des Ausrichtens durch Drehen der aufgenommenen Darstellung des Auges (102) so, dass die aufgenommene Augendarstellung eine selbe Ausrichtung hat wie eine nicht-geneigte erwartete Augendarstellung, oder durch Drehen der nicht-geneigten erwarteten Augendarstellung so, dass sie dieselbe Augenausrichtung hat wie die aufgenommene Augendarstellung, wobei die Drehung entsprechend der gewählten Polarisationsdrehung durchgeführt wird.

## Revendications

1. Procédé d'un système de reconnaissance biométrique (110) destiné à réaliser une détection de d'œil réel pour un individu (100), comprenant :
la capture (S101) d'une pluralité d'images comprenant une représentation d'un œil (102) de l'individu (100), lesquelles images sont capturées à l'aide d'une lumière polarisée réfléchie au niveau de l'œil (102) et reçue au niveau d'une caméra sensible à la polarisation (103) capturant lesdites images avec une configuration de polarisation sélectionnée, dans lequel, pour chaque image qui est capturée, une rotation de polarisation différente est sélectionnée ;
la détection (S102), à partir de la représentation dans chaque image capturée, de caractéristiques biréfringentes (122) d'une cornée de l'individu (100) ;
la détermination (S104), par l'appariement des caractéristiques biréfringentes de cornée (122) détectées des images capturées à des caractéristiques biréfringentes de cornée attendues en tenant compte de la configuration de polarisation, si les caractéristiques biréfringentes de cornée (122) détectées sont correctement restituées dans au moins l'une des images capturées ; et si tel est le cas :
la détermination (S105) que l'œil (102) est un œil réel.

2. Procédé selon la revendication 1, comprenant en outre :
l'alignement (S103) des caractéristiques biréfringentes de cornée (122) détectées des images capturées avec des caractéristiques biréfringentes de cornée d'une représentation d'œil attendue.

3. Procédé selon la revendication 1 ou 2, dans lequel l'orientation de polarisation de la lumière est sélectionnée pour être orthogonale par rapport à l'orientation de polarisation au niveau de la caméra.

4. Procédé selon l'une quelconque des revendications 1 à 3, comprenant en outre :
l'acquisition d'informations indiquant une inclinaison estimée de la tête de l'individu (100) au moyen de la réalisation d'une analyse faciale sur une image capturée, dans lequel la capture (S101) d'images est réalisée avec une rotation de polarisation sélectionnée pour se trouver dans une plage adaptée pour être appariée à l'inclinaison estimée de la tête ; et/ou
l'alignement (S103) des caractéristiques biréfringentes de cornée (122) détectées avec des caractéristiques biréfringentes de cornée d'une représentation d'œil attendue est réalisé par la sélection d'images qui sont capturées avec une rotation de polarisation se trouvant dans une plage de l'inclinaison estimée de la tête en tant que candidates d'alignement.

5. Procédé selon l'une quelconque des revendications 2 à 4, l'alignement (S103) étant réalisé par la rotation de chaque représentation d'œil (102) capturée de sorte que ladite chaque représentation d'œil capturée présente une même orientation qu'une représentation d'œil attendue non inclinée ou par la rotation de la représentation d'œil attendue non inclinée pour qu'elle présente la même orientation d'œil que ladite chaque représentation d'œil capturée, la rotation réalisée correspondant à la rotation de polarisation sélectionnée.

6. Procédé selon l'une quelconque des revendications précédentes, dans lequel, si un nombre défini d'échecs de tentatives de détermination (S104) que les caractéristiques biréfringentes (122) sont correctement restituées dans l'au moins une des images capturées est atteint, l'individu (100) est tenu de prouver qu'il connaît des justificatifs secrets avant de pouvoir effectuer d'autres tentatives.

7. Procédé selon l'une quelconque des revendications précédentes, comprenant en outre :
la comparaison (S106) des caractéristiques biréfringentes de cornée (122) détectées dont la restitution correcte est déterminée à des caractéristiques biréfringentes de cornée préalablement enregistrées ; et en cas de concordance :
l'authentification (S107) d'un individu (100) associé aux caractéristiques biréfringentes de cornée (122) dont la restitution correcte est déterminée.

8. Procédé selon l'une quelconque des revendications précédentes, comprenant en outre :
la détection (S106a), à partir de l'image dans laquelle la restitution correcte des caractéristiques biréfringentes de cornée est déterminée ou à partir d'une autre image capturée, de caractéristiques d'iris, de visage ou périoculaires ; et
la comparaison (S105b) des caractéristiques d'iris, de visage ou périoculaires détectées à des caractéristiques d'iris, de visage ou périoculaires préalablement enregistrées ; et, en cas de concordance, un individu (100) associé aux caractéristiques d'iris, de visage ou périoculaires détectées est authentifié (S106).

9. Programme informatique (107) comprenant des instructions exécutables par ordinateur pour amener un système de reconnaissance biométrique (110) à réaliser des étapes selon l'une quelconque des revendications 1 à 8 lorsque les instructions exécutables par ordinateur sont exécutées sur une unité de traitement (105) incluse dans le système de reconnaissance d'iris (110).

10. Support lisible par ordinateur (106) dans lequel est incorporé le programme informatique (107) selon la revendication 9.

11. Système de reconnaissance biométrique (110) configuré pour réaliser une détection de d'œil réel, le système (110) comprenant une caméra sensible à la polarisation (103) configurée pour :
capturer une pluralité d'images comprenant une représentation d'un œil (102) de l'individu (100), lesquelles images sont capturées à l'aide d'une lumière polarisée réfléchie au niveau de l'œil (102) et reçue au niveau d'une caméra sensible à la polarisation (103) capturant lesdites images avec une configuration de polarisation sélectionnée, dans lequel, pour chaque image qui est capturée, une rotation de polarisation différente est sélectionnée ; le système (110) comprenant en outre une unité de traitement (105) configurée pour :
détecter, à partir de la représentation dans chaque image capturée, des caractéristiques biréfringentes (122) d'une cornée de l'individu (100) ;
déterminer, par l'appariement des caractéristiques biréfringentes de cornée (122) détectées des images capturées à des caractéristiques biréfringentes de cornée attendues en tenant compte de la configuration de polarisation, si les caractéristiques biréfringentes de cornée (122) détectées sont correctement restituées dans au moins l'une des images capturées ; et si tel est le cas :
déterminer que l'œil (102) est un œil réel.

12. Système de reconnaissance biométrique (110) selon la revendication 11, l'unité de traitement (105) étant en outre configurée pour :
aligner les caractéristiques biréfringentes de cornée (122) détectées des images capturées avec des caractéristiques biréfringentes de cornée d'une représentation d'œil attendue.

13. Système de reconnaissance biométrique (110) selon la revendication 11 ou 12, dans lequel l'orientation de polarisation de la lumière est sélectionnée pour être orthogonale par rapport à l'orientation de polarisation au niveau de la caméra (103).

14. Système de reconnaissance biométrique (110) selon l'une quelconque des revendications 11 à 13, l'unité de traitement (105) étant en outre configurée pour :
acquérir des informations indiquant une inclinaison estimée de la tête de l'individu (100) au moyen de la réalisation d'une analyse faciale sur une image capturée, dans lequel la capture (S101) d'images est réalisée avec une rotation de polarisation sélectionnée pour se trouver dans une plage adaptée pour être appariée à l'inclinaison estimée de la tête ; et/ou
l'alignement (S103) des caractéristiques biréfringentes de cornée (122) détectées avec des caractéristiques biréfringentes de cornée d'une représentation d'œil attendue est réalisé par la sélection d'images qui sont capturées avec une rotation de polarisation se trouvant dans une plage de l'inclinaison estimée de la tête en tant que candidates d'alignement.

15. Système de reconnaissance biométrique (110) selon l'une quelconque des revendications 12 à 14, l'unité de traitement (105) étant en outre configurée pour réaliser l'alignement par la rotation de la représentation d'œil (102) capturée de sorte que la représentation d'œil capturée présente une même orientation qu'une représentation de l'œil attendue non inclinée ou par la rotation de la représentation d'œil attendue non inclinée pour présenter la même orientation d'œil que la représentation d'œil capturée, la rotation réalisée correspondant à la rotation de polarisation sélectionnée.
